# FASCICULE DE BREVET EUROPEEN

(11) **EP 0 884 281 B1**
(45) Date de publication et mention de la délivrance du brevet: **11.09.2002**
(21) Numéro de dépôt: 98440118.2
(22) Date de dépôt: 04.06.1998
(51) Int. Cl.: C02F 3/04, C02F 3/02, C02F 3/12

(54) **Procédé et installation pour le traitement d'effluents chargés en matières organiques**
Verfahren und Anlage zur Behandlung von organischen Substanzen enthaltenden Abwässern
Process and installation for the treatment of effluent loaded with organic substances

(30) Priorité: 13.06.1997 FR 9707547
(43) Date de publication de la demande: 16.12.1998
(73) Titulaire: VASLIN BUCHER (S.A.), 49290 Chalonnes sur Loire (FR); Calona Purflo, 49290 Chalonnes sur Loire (FR)
(72) Inventeur: Bonnet, Jean, 49100 Angers (FR); Cronier, Jean Noel, 35800 St Briac sur Mer (FR); Juhere, Yannick, 35260 Cancale (FR)
(74) Mandataire: Nuss, Pierre

(56) Documents cités:
- DE-A- 3 446 401
- DE-A- 4 341 591
- FR-A- 2 422 602

## Description

La présente invention concerne le domaine des traitements des déchets de processus produisant des déchets liquides chargés de matières organiques et a pour objet un procédé et une installation pour le traitement d'effluents du type précité, notamment d'effluents vinicoles essentiellement sous forme d'eaux de lavage.

Dans le cas de ces derniers effluents, la pollution générée est limitée à des périodes temporelles relativement courtes, pendant lesquelles les effluents sont rejetés en très grande quantité et peuvent constituer, de ce fait, un risque pour l'environnement et le milieu récepteur.

En effet, selon les régions, les années et les procédés de vinification utilisés, il faut prévoir entre 1 et 2 litres d'eau polluée généré(s) par litre de vin produit.

La quantité de pollution est donc directement proportionnelle à la quantité de vin produite.

Lorsque le viticulteur utilise moins d'eau, la pollution est plus concentrée, mais on peut estimer qu'en moyenne la charge organique est de 12 grammes de DCO (demande chimique en O₂) par litre de vin.

En outre, la quantité journalière est très variable et le lavage qui suit le soutirage peut ainsi quadrupler la production journalière moyenne.

Les effluents vinicoles sont relativement facilement biodégradables, tout en étant carencés en azote et en phosphore, et présentent une décantabilité relativement faible associée à une pollution dissoute importante.

Pour tenter de résoudre les problèmes liés à la production d'effluents vinicoles en grandes quantités, différentes solutions ont déjà été envisagées et, pour certaines, mises en oeuvre.

Ainsi, il a été notamment proposé d'épandre directement lesdits effluents sur de grandes surfaces de terres agricoles et de répartir de ce fait l'impact de leur déversement sur le milieu récepteur, de manière à atteindre des taux de pollution surfacique acceptables.

Toutefois, cette solution nécessite ponctuellement, en période de pointe de pollution, des moyens logistiques et humains importants et ne peut constituer une solution satisfaisante à long terme, notamment du fait des possibilités de renforcement des normes anti-pollution actuelles qui pourraient rendre ce procédé non conforme.

Il a également été proposé de réaliser un simple stockage aéré de ces effluents, puis de les épandre après une période de stockage suffisante.

Néanmoins, cette solution rencontre de nombreux problèmes de contrôle du taux de pollution et entraîne des durées de stockage importantes pour tenter d'atteindre des niveaux de pollution acceptables.

Enfin, il a, en outre, été proposé d'adapter les stations d'épuration traditionnelles en vue de leur utilisation pour le traitement des effluents vinicoles.

Toutefois, cette adaptation entraîne un surdimensionnement coûteux desdites stations pour pouvoir répondre aux pointes de pollution générées, sans pour autant permettre un contrôle fiable de l'évolution du taux de pollution, et donc de la qualité des effluents finaux rejetés, ce du fait notamment du fonctionnement continu de ces installations.

Le problème posé à la présente invention consiste, par conséquent, à pallier les inconvénients précités et à concevoir un procédé et une installation pour le traitement d'effluents chargés en matière organique, plus particulièrement d'effluents vinicoles, constituant une solution simple, adaptée, efficace, peu coûteuse et fiable dans le temps et permettant de répondre aux exigences réglementaires les plus strictes en ce qui concerne les effluents apurés rejetés.

A cet effet, la présente invention a pour objet un procédé de traitement d'effluents chargés en matières organiques, notamment d'effluents vinicoles essentiellement sous forme d'eaux de lavage, caractérisé en ce qu'il consiste principalement, pour chaque cycle de traitement, à déverser les effluents à traiter, au fur et à mesure de leur production, dans un bassin de stockage et à activer un circuit de recirculation entre ce dernier et un réacteur destiné notamment à oxygéner lesdits effluents, à activer un dispositif de suroxygénation intégré au bassin de stockage, lorsque le volume d'effluents stockés est trop important pour éviter de passer en phase anaérobie, ce tout en maintenant la recirculation par le réacteur, à stopper ensuite la suroxygénation et à maintenir la recirculation à un niveau minimal évitant le passage en anoxie des effluents, lorsque ces derniers vérifient certaines conditions minimales de pollution, à déverser simultanément et progressivement les effluents sur au moins une unité de massif d'épuration et à évacuer les effluents épurés, ce jusqu'à ne laisser sensiblement que des boues résiduelles de décantation plus ou moins minéralisées dans le bassin de stockage, et, enfin, à traiter éventuellement au moins une partie de ces dernières pour supprimer les composantes organiques présentes et aboutir à une boue minéralisée, sensiblement inerte.

L'invention a également pour objet une installation pour le traitement d'effluents chargés en particulier en matières organiques, notamment pour la mise en oeuvre du procédé décrit ci-dessus, caractérisée en ce qu'elle est principalement constituée par au moins un bassin de stockage adapté au volume d'effluents à traiter durant un cycle de traitement, au moins un réacteur relié au(x) bassin(s) de stockage par un circuit de recirculation, au moins un dispositif de suroxygénation disposé dans le ou dans chaque bassin de stockage, et une ou plusieurs unités de massif d'épuration alimentées en effluents prétraités à partir du réacteur.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue de dessus schématique d'une installation selon l'invention, et,
la figure 2 est une vue de détail en coupe d'une unité de massif d'épuration faisant partie de l'installation représentée à la figure 1.

Le procédé de traitement selon l'invention consiste principalement, pour chaque cycle de traitement, à déverser les effluents à traiter, au fur et à mesure de leur production, dans un bassin de stockage 1 et à activer un circuit de recirculation 2 entre ce dernier et un réacteur 3 destiné notamment à oxygéner lesdits effluents, à activer un dispositif de suroxygénation 4 intégré au bassin de stockage 1, lorsque le volume d'effluents stockés est trop important pour éviter de passer en phase anaérobie, ce tout en maintenant la recirculation par le réacteur 3, à stopper ensuite la suroxygénation et à maintenir la recirculation à un niveau minimal évitant le passage en anoxie des effluents, lorsque ces derniers vérifient certaines conditions minimales de pollution, à déverser simultanément et progressivement les effluents sur au moins une unité de massif d'épuration 5 et à évacuer les effluents épurés, ce jusqu'à ne laisser sensiblement que des boues résiduelles de décantation plus ou moins minéralisées dans le bassin de stockage 1, et, enfin, à traiter éventuellement au moins une partie de ces dernières pour supprimer les composantes organiques présentes et aboutir à une boue minéralisée, sensiblement inerte.

Les boues résiduelles présentes après extraction des effluents liquides comportent, d'une part, des matières en suspension décantables et peu biodégradables et, d'autre part, des boues biologiques produites lors du processus d'épuration aérobie.

Après l'arrêt du dispositif de suroxygénation 4, ces boues biologiques se décantent lentement en absence d'oxygène et se minéralisent en anaérobiose, le carbone dégradable se transformant en gaz et ne laissant progressivement que des composés minéraux.

Cependant, la densité de ces boues n'est pas uniforme : de 150 grammes par litre pour celles qui reposent sur le fond, on passe à 20 grammes par litre dans la zone appelée "voile de boues" à l'interface liquide/boues. Les boues les plus minéralisées, donc les plus inertes, sont les plus lourdes. Les plus biodégradables sont les plus légères, et se situent donc en surface.

Le traitement des boues résiduelles consiste avantageusement à faire fonctionner le dispositif de suroxygénation 4 et le circuit de recirculation 2 sensiblement au maximum de leurs possibilités et à entraîner la composante légère des boues résiduelles, comprenant le taux le plus élevé de matières organiques, vers la zone de suroxygénation en vue de sa dégradation et de sa minéralisation en phase aérobie, de manière à aboutir à une quantité minimale de résidus constitués de boues minéralisées, denses et inertes.

L'extraction des boues peut être effectuée, en vue de leur épandage, par exemple, en fin de période estivale qui se prête bien à leur absorption par le sol.

Les boues inertes finales peuvent également, en fonction des quantités produites et de la contenance du bassin de stockage 1, rester stockées dans ledit bassin pour une extraction et un nettoyage complet tous les 5 ans, par exemple.

Afin d'éliminer les particules solides de grande taille et de limiter la quantité de matières à décanter, il peut être avantageusement prévu que les effluents soient soumis à un tamisage ou à un dégrillage, éventuellement associé à une décantation, avant leur déversement dans le bassin de stockage 1.

Conformément à un mode de réalisation préférentiel de l'invention, le déversement des effluents du réacteur 3 sur le massif d'épuration 5 est réalisé de manière séquentielle, en transférant une partie du contenu du réacteur 3 vers ledit massif 5 à chaque séquence, lorsque le taux de pollution de ladite partie est inférieur à une valeur seuil déterminée.

Selon une caractéristique de l'invention, il peut également être prévu, notamment durant la phase de suroxygénation, d'utiliser le réacteur d'oxygénation 3 pour l'injection de produits favorisant l'épuration dans le bassin de stockage 1 par l'intermédiaire du circuit de recirculation 2 et pour la mesure et la surveillance d'au moins un paramètre indicateur du taux de pollution, par exemple une demande chimique et/ou biologique en O₂ mesurée dans les effluents, pour déterminer l'instant approprié pour injecter une partie au moins du contenu du réacteur 3 sur le massif 5, lorsque des conditions minimales de pollution sont remplies (telles qu'une DCO inférieure à 1 g/l).

A titre d'exemples de produits injectables favorisant l'épuration, on peut notamment citer les produits à base de silicone du type connu sous la désignation RHODORSYL de la société CRAY-VALLEY, ainsi que différentes préparations commerciales biologiques actives contenant, par exemple, des bactéries et/ou des levures sélectionnées pour leurs performances épuratives.

Le réacteur 3 permet, par conséquent, de réaliser par exemple des mesures, éventuellement combinées, de respirométrie et/ou de matières en suspension, tout en servant de contenant de décantation des effluents avant leur déversement sur le massif d'épuration 5.

Le fonctionnement séquentiel du réacteur 3 (remplissage - période de traitement et de décantation - évacuation d'une partie du contenu sur le massif d'épuration) permet de contrôler de manière très précise l'évolution du taux de pollution des effluents et de ne transférer ces derniers, ou une partie de ces derniers, que lorsque des conditions minimales de pollution sont atteintes.

Ainsi, le massif d'épuration 5 sera alimenté, séquentiellement, avec des quantités déterminées d'effluents adaptées à la surface dudit massif et dont le taux de pollution permet un traitement optimal par ce dernier, garantissant une pollution minimale au niveau des effluents finaux rejetés.

La recirculation des effluents durant la phase de suroxygénation permet, en outre, d'homogénéiser les effluents stockés par la génération de courants favorisant un mélange de ces derniers.

Conformément à une autre caractéristique de l'invention, le massif d'épuration 5 consiste en une ou plusieurs unités de massif de sable dont les caractéristiques et les dimensionnements sont déterminés de telle manière que le facteur limitatif du développement bactérien dans le massif soit le manque de carbone et non pas le manque en oxygène.

En vue de favoriser ce mode de fonctionnement, le massif d'épuration 5 peut être soumis à une dépression, par application d'une aspiration à l'intérieur du massif de sable de manière à favoriser l'aération de la couche superficielle 5' du massif 5 recevant en premier les effluents provenant du réacteur 3, réalisant une oxygénation dudit massif 5 et une évacuation des gaz produits.

En effet, lorsque le carbone devient le facteur limitatif du développement bactérien, il est totalement transformé par les bactéries aérobies en gaz carbonique et en divers carbonates dissous, ce qui permet au procédé de garantir la pérennité d'un niveau d'épuration conforme à celui exigé par les réglementations.

Selon un mode de réalisation préférentiel de l'invention, particulièrement adapté aux traitements des effluents vinicoles, chaque cycle de traitement dure sensiblement 365 jours, cette durée de cycle étant subdivisée temporellement en plusieurs périodes consécutives correspondant aux différentes opérations de traitement, à savoir, par exemple, une première période d'environ 10 jours, débutant avec les vendanges et correspondant à un stockage aéré des effluents déversés avec recirculation et oxygénation, une deuxième période de 40 à 110 jours, préférentiellement d'environ 90 jours, correspondant à la phase de suroxygénation, une troisième période de 100 à 250 jours, préférentiellement d'environ 200 jours, correspondant à une recirculation minimale, à une décantation de matières en suspension des effluents stockés dans le bassin 1 et à un déversement progressif et séquentiel desdits effluents liquides sur le massif d'épuration 5 à partir du réacteur 3 après vérification des conditions minimales de pollution et, enfin, une quatrième période d'environ 65 jours correspondant à la minéralisation des boues résiduelles et, le cas échéant, à leur évacuation du bassin de stockage 1.

Un tel étalement dans le temps permet, d'une part, de dimensionner l'installation de traitement et ses composantes au plus juste par rapport aux besoins de l'utilisateur (solution la plus économique en investissement et en frais de fonctionnement) et, d'autre part, d'utiliser au maximum les processus naturels (réactions biochimiques, réactions biologiques, décantation) pour l'épuration des effluents (limitation des interventions extérieures aux processus naturels).

Il convient de noter que la première et la plus importante pointe de pollution a lieu durant la première période précitée et correspond au déversement des eaux de nettoyage produites pendant la période des vendanges.

Ces eaux sont facilement fermentescibles et la température automnale favorise le développement de micro-organismes de type anabacter. Ce type de bactéries anaérobies produit des gaz malodorants, notamment du méthyl mercaptan, de l'hydrogène sulfuré et du méthane.

Afin d'éviter toute nuisance olfactive importante, dès le début du stockage, la mise en route de la recirculation entre le réacteur 3 et le bassin de stockage 1 permet de maintenir un niveau d'oxydation empêchant l'apparition de mauvaises odeurs.

Par ailleurs, durant la troisième période précitée, débutant par l'arrêt du dispositif de suroxygénation 4, les effluents tranquillisés contenus dans le bassin de stockage 1 peuvent décanter dans des conditions optimales. Simultanément, le temps de séjour des effluents s'allonge dans le réacteur 3 permettant, d'une part, un nouveau développement de la biomasse épuratrice, d'autre part, un maintien de l'effluent à saturation d'oxygène dissout.

La présente invention a également pour objet une installation pour le traitement d'effluents chargés en particulier en matières organiques, et destiné notamment, mais non limitativement, à la mise en oeuvre du procédé de traitement décrit ci-dessus.

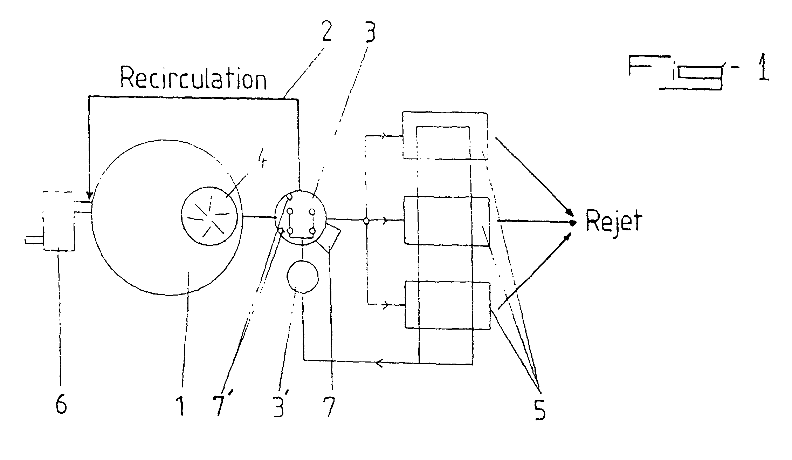

Cette installation est principalement constituée, comme le montre la figure 1 des dessins annexés, par au moins un bassin de stockage 1 adapté au volume d'effluents à traiter durant un cycle de traitement, au moins un réacteur 3 relié au(x) bassin(s) de stockage 1 par un circuit de recirculation 2, au moins un dispositif de suroxygénation 4 disposé dans le ou dans chaque bassin de stockage 1, et une ou plusieurs unités 5 de massif d'épuration alimentées en effluents prétraités à partir du réacteur 3.

Le bassin 1 de stockage et de décantation présente avantageusement une conformation facilitant l'extraction des boues résiduelles et le rendant apte à recevoir un dispositif de suroxygénation 4 qui permet, en fournissant un apport d'oxygène massif, de ramener rapidement la pollution biologique à un niveau acceptable pour le traitement final par un massif d'épuration 5 du type massif de sable.

Afin de limiter la taille des particules solides déversées dans le bassin de stockage 1, l'installation peut comporter une station 6 de dégrillage ou de tamisage, le cas échéant muni d'un débourbeur, disposé en amont du bassin de stockage 1 et piégeant, par exemple, les particules présentant des sections supérieures à 1 cm².

Conformément à une caractéristique de l'invention, le réacteur 3 peut être disposé à l'intérieur du bassin de stockage 1, comporter un système d'oxygénation par diffuseur à bulles fines et être muni de moyens d'injection de produits chimiques et/ou biologiques favorisant l'épuration et de moyens d'analyse des effluents, notamment de leur degré de pollution et/ou d'oxygénation.

Ce réacteur biologique 3, préférentiellement à structure verticale, est muni d'une pompe de recirculation intégrée au circuit de recirculation et d'une pompe d'injection des effluents sur le massif d'épuration 5, pouvant être actionnée séquentiellement pour des séquences d'injection d'effluents de quelques minutes par heure.

Ledit réacteur 3 pourra, par exemple, consister en un réacteur du type de ceux fabriqués par la société CALONA-PURFLO.

Préférentiellement, l'aspiration et la réinjection des effluents dans le bassin de stockage 1 par le circuit de recirculation 2 sont réalisées respectivement à deux extrémités opposées dudit bassin 1 de manière à créer un flux ou un courant d'effluents traversant ce dernier, sensiblement parallèle au courant généré par le déversement initial des effluents dans ledit bassin 1 et dirigé notamment vers le dispositif de suroxygénation 4.

Le suroxygénérateur pourra, quant à lui, consister, par exemple, en un suroxygénérateur du type connu sous la désignation C3201 par la société FLYGT.

Selon une autre caractéristique de l'invention, chaque unité de massif d'épuration 5 comporte une couche de sable siliceux présentant une granulométrie comprise entre 2 mm et 6 mm, un coefficient d'uniformité de 3,5 et un dimensionnement déterminé de telle manière que le facteur limitatif du développement bactérien dans le massif soit le manque de carbone.

Le massif d'épuration 5 sera dimensionné de telle manière que le déversement séquentiel des effluents à partir du réacteur 3 produise, au niveau dudit massif, une lame d'eau inférieure à environ 10 cm/m²/jour, préférentiellement inférieure à 5 cm/m²/jour.

Ce massif présentera avantageusement une épaisseur comprise entre 30 et 80 cm, préférentiellement d'environ 60 cm.

Les différentes unités de massif d'épuration 5 présentes forment un ensemble comprenant un système de répartition des effluents sous pression (tuyaux d'épandage 8), qui permet d'arroser et donc d'utiliser l'intégralité de la surface du massif, le massif d'épuration proprement dit, constituant le support de la biomasse et formé d'une couche de sable siliceux, et un système de récupération des effluents épurés situé à la base du massif et composé de drains de récupération 9 à large fente permettant une récupération même partielle des effluents pour les diriger vers le milieu hydraulique superficiel et autorisant, le cas échéant, une prise d'échantillons pour analyse.

Conformément à une caractéristique complémentaire de l'invention, chaque unité de massif à sable 5 est soumise à une dépression par aspiration au niveau de la base de l'unité 5 concernée, cette mise en dépression permettant de remplacer en permanence le gaz carbonique de la respiration biologique par un apport d'oxygène frais et de favoriser une limitation du développement bactérien par le manque de carbone.

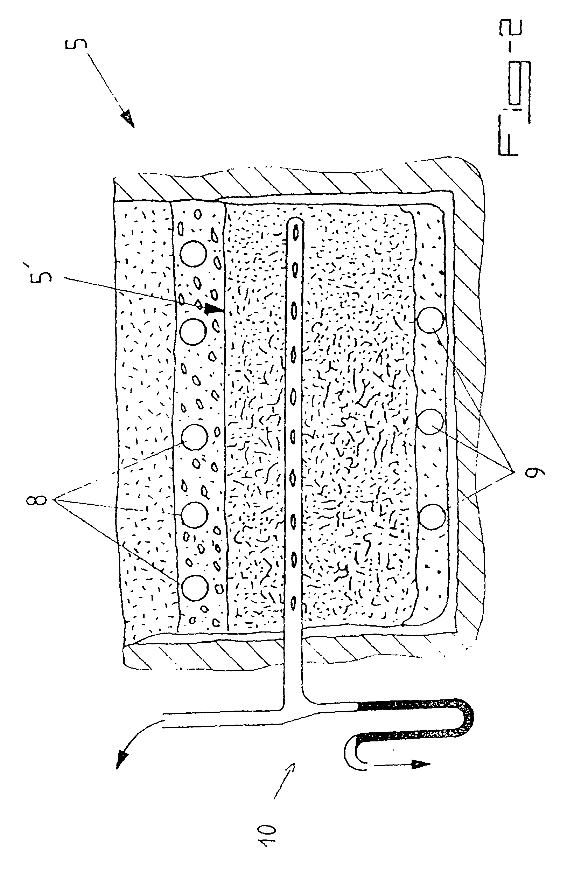

Comme le montre les figures 1 et 2 des dessins annexés, l'aspiration peut être réalisée par branchement sur le compresseur ou surpresseur 3' du système d'oxygénation du réacteur 3, par exemple par l'intermédiaire d'un dispositif à siphon 10.

L'installation selon l'invention pourra également comprendre au moins une unité 7 de commande et de gestion du procédé mis en oeuvre, par exemple du type automate programmable, qui contrôle automatiquement le déroulement des cycles successifs de traitement, en étant associé à des capteurs 7' et à des actionneurs adaptés.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de traitement d'effluents chargés en matières organiques, notamment d'effluents vinicoles essentiellement sous forme d'eaux de lavage, **caractérisé en ce qu'**il consiste principalement, pour chaque cycle de traitement, à déverser les effluents à traiter, au fur et à mesure de leur production, dans un bassin de stockage (1) et à activer un circuit de recirculation (2) entre ce dernier et un réacteur (3) destiné notamment à oxygéner lesdits effluents, à activer un dispositif de suroxygénation (4) intégré au bassin de stockage (1), lorsque le volume d'effluents stockés est trop important pour éviter de passer en phase anaérobie, ce tout en maintenant la recirculation par le réacteur (3), à stopper ensuite la suroxygénation et à maintenir la recirculation à un niveau minimal évitant le passage en anoxie des effluents, lorsque ces derniers vérifient certaines conditions minimales de pollution, à déverser, simultanément et progressivement, les effluents sur au moins une unité de massif d'épuration (5), par exemple sous la forme d'au moins une unité de massif de sable, et à évacuer les effluents épurés, ce jusqu'à ne laisser sensiblement que des boues résiduelles de décantation plus ou moins minéralisées dans le bassin de stockage (1), et, enfin, à traiter éventuellement au moins une partie de ces dernières pour supprimer les composantes organiques présentes et aboutir à une boue minéralisée, sensiblement inerte.

2. Procédé selon la revendication 1, **caractérisé en ce que** le traitement des boues résiduelles consiste à faire fonctionner le dispositif de suroxygénation (4) et le circuit de recirculation (2) sensiblement au maximum de leurs possibilités et à entraîner la composante légère des boues résiduelles, comprenant le taux le plus élevé de matières organiques, vers la zone de suroxygénation en vue de sa dégradation et de sa minéralisation en phase aérobie.

3. Procédé selon l'une quelconque des revendications 1 et 2, **caractérisé en ce que** le déversement des effluents du réacteur (3) sur le massif d'épuration (5) est réalisé de manière séquentielle, en transférant une partie du contenu du réacteur (3) vers ledit massif (5) à chaque séquence, lorsque le taux de pollution de ladite partie est inférieur à une valeur seuil déterminée.

4. Procédé selon l'une quelconque des revendications 1 à 3, **caractérisé en ce qu'**il consiste à utiliser le réacteur (3) d'oxygénation pour l'injection de produits favorisant l'épuration dans le bassin de stockage (1) par l'intermédiaire du circuit de recirculation (2) et pour la mesure et la surveillance d'au moins un paramètre indicateur du taux de pollution, par exemple une demande en O₂ mesurée dans les effluents, pour déterminer l'instant approprié pour déverser une partie du contenu du réacteur (3) sur le massif (5), lorsque des conditions minimales de pollution sont remplies.

5. Procédé selon l'une quelconque des revendications 1 à 4, **caractérisé en ce que** le massif d'épuration (5) consiste en une ou plusieurs unités de massif de sable, dont les caractéristiques et les dimensionnements sont déterminés de telle manière que le facteur limitatif du développement bactérien dans le massif soit le manque de carbone.

6. Procédé selon la revendication 5, **caractérisé en ce que** le massif d'épuration (5) est soumis à une dépression, par application d'une aspiration à l'intérieur du massif de sable, de manière à favoriser l'aération de la couche superficielle (5') du massif (5) recevant en premier les effluents provenant du réacteur (3).

7. Procédé selon l'une quelconque des revendications 2 à 6, **caractérisé en ce que**, pour le traitement des effluents vinicoles, chaque cycle de traitement dure sensiblement 365 jours, cette durée de cycle étant subdivisée temporellement en plusieurs périodes consécutives correspondant aux différentes opérations de traitement, à savoir, par exemple, une première période d'environ 10 jours, débutant avec les vendanges et correspondant à un stockage aéré des effluents déversés avec recirculation et oxygénation, une deuxième période de 40 à 110 jours, préférentiellement d'environ 90 jours, correspondant à la phase de suroxygénation, une troisième période de 100 à 250 jours, préférentiellement d'environ 200 jours, correspondant à une recirculation minimale, à une décantation de matières en suspension des effluents stockés dans le bassin (1) et à un déversement progressif et séquentiel desdits effluents liquides sur le massif d'épuration (5) à partir du réacteur (3) après vérification des conditions minimales de pollution et, enfin, une quatrième période d'environ 65 jours correspondant à la minéralisation des boues résiduelles et, le cas échéant, à leur évacuation du bassin de stockage (1).

8. Installation pour le traitement d'effluents chargés en particulier en matières organiques, notamment pour la mise en oeuvre du procédé selon l'une quelconque des revendications 1 à 7, **caractérisée en ce qu'**elle est principalement constituée par au moins un bassin de stockage (1) adapté au volume d'effluents à traiter durant un cycle de traitement, au moins un réacteur (3) relié au(x) bassin(s) de stockage (1) par un circuit de recirculation (2), au moins un dispositif de suroxygénation (4) disposé dans le ou dans chaque bassin de stockage (1), et une ou plusieurs unités de massif d'épuration (5) alimentée(s) en effluents prétraités à partir du réacteur (3).

9. Installation selon la revendication 8, **caractérisée en ce que** le réacteur (3) est disposé à l'intérieur du bassin de stockage (1), comporte un système d'oxygénation par diffuseur à fines bulles et est muni de moyens d'injection de produits favorisant l'épuration et de moyens d'analyse des effluents, notamment de leur degré de pollution et/ou d'oxygénation.

10. Installation selon l'une quelconque des revendications 8 et 9, **caractérisée en ce que** l'aspiration et la réinjection des effluents dans le bassin de stockage (1) par le circuit de recirculation (2) sont réalisées respectivement à deux extrémités opposées dudit bassin (1) de manière à créer un flux ou un courant d'effluents traversant ce dernier, sensiblement parallèle au courant généré par le déversement initial des effluents dans ledit bassin (1) et dirigé notamment vers le dispositif de suroxygénation (4).

11. Installation selon l'une quelconque des revendications 8 à 10, **caractérisée en ce que** chaque unité de massif d'épuration (5) comporte une couche de sable siliceux présentant une granulométrie comprise entre 2 mm et 6 mm, un coefficient d'uniformité de 3,5 et un dimensionnement déterminé de telle manière que le facteur limitatif du développement bactérien dans le massif soit le manque de carbone.

12. Installation selon l'une quelconque des revendications 8 à 11, **caractérisée en ce que** chaque unité (5) de massif de sable est soumise à une dépression par aspiration.

13. Installation selon la revendication 12, **caractérisée en ce que** l'aspiration est réalisée par branchement sur le compresseur ou surpresseur (3') du système d'oxygénation du réacteur (3), par exemple par l'intermédiaire d'un dispositif à siphon.

## Claims

1. Process for the treatment of effluent loaded with organic substances, in particular wine-making effluent essentially in the form of washing water, **characterised in that** it mainly involves, for each treatment cycle, discharging the effluent to be treated as it is produced into a storage basin (1) and activating a recirculation circuit (2) between the storage basin (1) and a reactor (3) intended, in particular, to oxygenate said effluent, activating a superoxygenation device (4) integrated in the storage basin (1) when the volume of effluent stored is too great to avoid passing into the anaerobic phase, while maintaining recirculation by the reactor (3), then stopping superoxygenation and maintaining recirculation at a minimum level so as to prevent the effluent passing to anoxia when the effluent verifies certain minimum pollution conditions, simultaneously and progressively discharging the effluent over at least one purification block (5), for example in the form of at least one sand block unit and removing the purified effluent until substantially only more or less mineralised residual decantation sludge is left in the storage basin (1) and finally treating at least a portion thereof, if necessary, to eliminate the organic components present and end up with a substantially inert mineralised sludge.

2. Process according to claim 1, **characterised in that** the treatment of the residual sludge involves causing the superoxygenation device (4) and the recirculation circuit (2) to operate substantially at their maximum capacity and entraining the light component of the residual sludge comprising the highest content of organic substances toward the superoxygenation zone for the degradation thereof and the mineralization thereof in the aerobic phase.

3. Process according to any one of claims 1 and 2, **characterised in that** the discharge of the effluent from the reactor (3) to the purification block (5) is carried out sequentially by transferring a portion of the content of the reactor (3) toward said block (5) during each sequence when the pollution rate of said portion is lower than a predetermined threshold.

4. Process according to any one of claims 1 to 3, **characterised in that** it involves using the oxygenation reactor (3) for injecting products to promote purification in the storage basin (1) via the recirculation circuit (2) and for measuring and monitoring at least one parameter indicative of the pollution rate, for example a demand for O₂ measured in the effluent, in order to determine the appropriate instant to discharge a portion of the content of the reactor (3) over the block (5) when minimum pollution conditions are satisfied.

5. Process according to any one of claims 1 to 4, **characterised in that** the purification block (5) consists of one or more sand block units of which the characteristics and dimensions are determined such that the factor limiting bacterial growth in the block is the lack of carbon.

6. Process according to claim 5, **characterised in that** the purification block (5) is subjected to a vacuum by application of a suction to the interior of the sand block so as to promote aeration of the surface layer (5') of the block (5) first receiving the effluent originating from the reactor (3).

7. Process according to any one of claims 2 to 6, **characterised in that**, for the treatment of wine-making effluent, each treatment cycle lasts substantially 365 days, this cycle duration being temporally subdivided into a plurality of consecutive periods corresponding to the various treatment operations, namely, for example, a first period of about 10 days beginning with the grape harvest and corresponding to aerated storage of the discharged effluent with recirculation and oxygenation, a second period of 40 to 110 days, preferably about 90 days, corresponding to the superoxygenation phase, a third period of 100 to 250 days, preferably of about 200 days, corresponding to minimum recirculation, to decantation of suspended substances of the effluent stored in the basin (1) and to progressive and sequential discharge of said liquid effluent over the purification block (5) from the reactor (3) after verifying the minimum pollution conditions and, finally, a fourth period of about 65 days corresponding to the mineralization of the residual sludge and, if applicable, to their removal from the storage basin (1).

8. Installation for the treatment of effluent loaded, in particular, with organic substances, in particular for carrying out the process according to any of claims 1 to 7, **characterised in that** it mainly consists of at least one storage basin (1) adapted to the volume of effluent to be treated during a treatment cycle, at least one reactor (3) connected to the storage basin (1) by a recirculation circuit (2), at least one superoxygenation device (4) disposed in the or in each storage basin (1) and one or more purification block units (5) supplied with pretreated effluent from the reactor (3).

9. Installation according to claim 8, **characterised in that** the reactor (3) is disposed in the interior of the storage basin (1), comprises a system of oxygenation by fine-bubble diffuser and is equipped with means for injecting products which promote purification and means for analysing the effluent, in particular the degree of pollution and/or oxygenation thereof.

10. Installation according to any one of claims 8 and 9, **characterised in that** the suction and reinjection of the effluent in the storage basin (1) via the recirculation circuit (2) are carried out respectively at two opposing ends of said basin (1) so as to create a flow or a stream of effluent traversing the basin, the flow or stream being substantially parallel to the stream generated by the initial discharge of the effluent into the basin (1) and directed, in particular, toward the superoxygenation device (4).

11. Installation according to any one of claims 8 to 10, **characterised in that** each purification block unit (5) comprises a layer of siliceous sand having a grain size of between 2 mm and 6 mm, a coefficient of uniformity of 3.5 and dimensioning which is determined such that the factor limiting bacterial growth in the block is the lack of carbon.

12. Installation according to any one of claims 8 to 11, **characterised in that** each sand block unit (5) is subjected to a vacuum by suction.

13. Installation according to claim 12, **characterised in that** suction is applied by connection to the compressor or blower (3') of the oxygenation system of the reactor (3), for example via a siphon-type device.

## Patentansprüche

1. Verfahren zum Behandeln von organische Substanzen
enthaltenden Abwässern, insbesondere Abwässer auf dem Gebiet des Weinbaus in Form von Waschwässern, **dadurch gekennzeichnet, daß** es für jeden Behandlungszyklus im wesentlichen folgende Schritte aufweist: Einleiten der zu behandelnden Abwässer, so wie sie anfallen, in ein Speicherbecken (1) und Aktivieren eines Umwälzkreises (2) zwischen den Speicherbecken (1) und einem Reaktor (3), der insbesondere dazu dient, die genannten Abwässer mit Sauerstoff anzureichern; Aktivieren einer Einrichtung (4) zur Sauerstoff-Überversorgung, welche in das Speicherbecken (1) integriert ist, wenn die Menge der gespeicherten Abwässer zu groß ist; um zu vermeiden, daß ein Übergang in eine anaerobe Phase erfolgt, wobei die Umwälzung durch den Reaktor (3) aufrecht erhalten wird; Anhalten der Sauerstoff-Überversorgung und Aufrechterhalten der Umwälzung auf minimalem Niveau, bei welchem noch gewährleistet ist, daß ein Übergang in eine Unterbrechung der Sauerstoffversorgung der Abwässer verhindert wird, wenn die Abwässer gewisse minimale Verschmutzungskriterien erfüllen; simultanes und progressives Ableiten der Abwässer auf mindestens eine Festbett-Reinigungseinheit (5), welche z. B. die Form mindestens einer Sandbett-Einheit haben kann; und Abführen der gereinigten Abwässer so lange, bis im wesentlichen nur noch beim Dekantieren zurückbleibende Schlämme im Speicherbecken (1) zurückbleiben, die mehr oder weniger mineralisiert sind; und schließlich ggf. Behandeln mindestens eines Teiles der Restschlämme zur Unterdrückung der organischen Komponenten, die in ihnen enthalten sind, um zu einem mineralisierten Schlamm zu kommen, der im wesentlichen inert ist.

2. Verfahren nach Anspruch 1, **dadurch gekennzeichnet,**
**daß** die Behandlung der Restschlämme darin besteht, daß man die Einrichtung (4) zur Sauerstoff-Überversorgung und den Umwälzkreis (2) im wesentlichen mit maximaler Kapazität in Gang setzt und den Leichtbestandteil der Restschlämme, welcher den höchsten Anteil der organischen Substanzen enthält, in die Zone wegträgt, in welcher die Sauerstoff-Überversorgung erfolgt, um diesen leichten Anteil zu zersetzen und in aerober Phase seine Mineralisation herbeizuführen.

3. Verfahren nach Anspruch 1 oder 2, dadurch gekennzeich net, daß das Ableiten der Abwässer aus dem Reaktor (3) auf das Reinigungsbett (5) in sequentieller Weise erfolgt, indem ein Teil des Inhaltes des Reaktors (3) bei jedem Teilschritt auf das Bett (5) übergeleitet wird, wenn der Verschmutzungsgrad dieses Teiles kleiner ist als ein vorgegebener Schwellwert.

4. Verfahren nach einem der Ansprüche 1 bis 3, **dadurch**
**gekennzeichnet, daß** der zur Sauerstoffanreicherung dienende Rekator (3) dazu verwendet wird, mittels des Umwälzkreises (2) Produkte einzuspeisen, welche die Reinigung im Speicherbecken (1) begünstigen, und daß der Reaktor (3) dazu verwendet wird, mindestens einen für den Verschmutzungsgrad charakteristischen Parameter zu messen und zu überwachen, z.B. ein in den Abwässern gemessener Bedarf an O₂, um den geeigneten Zeitpunkt zu bestimmen, zu welchem ein Teil des Inhaltes des Reaktors (3) auf das Bett (5) gegeben wird, wenn die Minimal-Verschmutzungskriterien erfüllt sind.

5. Verfahren nach einem der Ansprüche 1 bis 4, **dadurch**
**gekennzeichnet, daß** das Reinigungsbett (5) aus einem oder mehreren Sandbett-Einheiten besteht, deren Eigenschaften und Abmessungen so bestimmt sind, daß der die Bakterienentwicklung im Bett begrenzende Faktor der Mangel an Kohlenstoff ist.

6. Verfahren nach Anspruch 5, **dadurch gekennzeichnet,**
**daß** das Reinigungsbett (5) mit Unterdruck beaufschlagt wird, in dem im Inneren des Sandbettes ein Sog erzeugt wird, so daß die Belüftung der Oberflächenschicht des Bettes (5), welche als erste die vom Reaktor (3) herkommenden Abwässer erhält, begünstigt wird.

7. Verfahren nach einem der Ansprüche 2 bis 6, **dadurch**
**gekennzeichnet, daß** für die Behandlung von Abwässern auf dem Gebiet des Weinbaus jeder Behandlungszyklus im wesentlichen 365 Tage dauert, wobei diese Zyklusdauer in der Zeit in mehrere aufeinander folgende Perioden unterteilt ist, die den verschiedenen Behandlungsschritten entsprechen, z.B. eine erste Periode von etwa 10 Tagen, die mit der Weinlese beginnt und einem Speichern der eingeleiteten Abwässer unter Luftzufuhr bei Umwälzung sowie Sauerstoffzufuhr entspricht, eine zweite Periode von etwa 40 bis 110 Tagen, vorzugsweise etwa 90 Tagen, die der Phase der Sauerstoff-Überversorgung entspricht, eine dritte Periode von 100 bis 250 Tagen, vorzugsweise etwa 200 Tagen, die einer minimalen Umwälzung, einem Dekantieren der Feststoffe, die in den in dem Speicherbecken (1) befindlichen Abwässern in Suspension sind, und einem progressiven und sequenziellen Ableiten der flüssigen Abwässer auf das Reinigungsbett (5) ausgehend von dem Reaktor (3) nach Erfüllen der Minimal-Verschmutzungskriterien entspricht, und schließlich eine vierte Periode von etwa 65 Tagen, die der Mineralisation der Restschlämme und ggf. ihrem Abziehen aus dem Speicherbecken (1) entspricht.

8. Anlage zum Behandeln von Abwässern, die insbesondere
mit organischen Substanzen belastet sind, insbesondere zur Durchführung des Verfahrens nach einem der Ansprüche 1 bis 7, **dadurch gekennzeichnet, daß** sie im wesentlichen aufweist: Ein Speicherbecken (1), welches ein Volumen an zu behandelnden Abwässern innerhalb eines Behandlungszyklus aufnimmt, mindestens einen Reaktor (3), der mit dem Speicherbecken/den Speicherbecken (1) durch einen Umwälzkreis (2) verbunden ist, mindestens eine Einrichtung zur Sauerstoff-Überversorgung (4), die in dem Speicherbecken (1)/in allen Speicherbecken (1) angeordnet ist, und ein oder mehrere Reinigungsbett-Einheiten (5), die mit den am Ausgang des Reaktors (3) erhaltenen vorbehandelten Abwässern beaufschlagt sind.

9. Anlage nach Anspruch 8, **dadurch gekennzeichnet,**
**daß** der Reaktor (3) im Inneren des Speicherbeckens (1) angeordnet ist, eine Einrichtung zur Sauerstoff-Anreicherung in kleine Blasen unter Verwendung eines Diffusors aufweist, Mittel zum Einleiten von solchen Produkten aufweist, welche die Reinigung begünstigen, und Mittel zum Analysieren der Abwässer aufweist, insbesondere bezüglich ihres Verschmutzungsgrades und/oder des Sauerstoffgehaltes.

10. Anlage nach einem der Ansprüche 8 und 9, **dadurch**
**gekennzeichnet, daß** das Ansaugen bzw. Wiedereinspeisen der Abwässer in das Speicherbecken (1) durch den Umwälzkreis (2) an zwei einander gegenüberliegenden Enden des Speicherbeckens (1) so erfolgt, daß ein Fluß oder Strom der Abwässer erzeugt wird, der das Speicherbecken durchquert, und zwar im wesentliche parallel zu demjenigen Strom, der durch das erste Einleiten der Abwässer in das Speicherbecken (1) erzeugt wird und in erster Linie in Richtung auf die Einrichtung zur Sauerstoff-Überversorgung (4) gerichtet ist.

11. Anlage nach einem der Ansprüche 8 bis 10, **dadurch gekennzeichnet, daß** jede Reinigungsbett-Einheit (5) eine Schicht Silikatsand umfasst, der eine Partikelgröße zwischen 2 mm, einen Gleichförmigkeitskoeffizienten von 3,5 und eine Abmessung aufweist, die derart bestimmt ist, daß der die Entwicklung von Bakterien begrenzende Faktor im Bett der Mangel an Kohlenstoff ist.

12. Anlage nach einer der Ansprüche 8 bis 11, **dadurch gekennzeichnet, daß** jede der Sandbett-Einheiten (5) durch Ausüben einer Saugwirkung mit Unterdruck beaufschlagt wird.

13. Anlage nach Anspruch 12, **dadurch gekennzeichnet,**
**daß** die Saugwirkung dadurch erzeugt wird, daß man einen Anschluß zu dem Kompressor oder Überdruckerzeuger (3) der Einrichtung zur Sauerstoffanreicherung im Reaktor (3) herstellt, z.B. unter Zwischenschaltung eines Siphons.
